# EUROPÄISCHE PATENTANMELDUNG

(11) **EP 2 012 505 A1**
(43) Veröffentlichungstag der Anmeldung: **07.01.2009**
(21) Anmeldenummer: 08103900.0
(22) Anmeldetag: 09.05.2008
(51) Int. Cl.: H04M 1/02, G06F 1/16, G01C 21/20, G08B 21/06

(54) **Tragbares elektronisches Gerät**

(30) Priorität: 06.07.2007 DE 102007031559
(71) Anmelder: ROBERT BOSCH GMBH, 70442 Stuttgart (DE)
(72) Erfinder: Zuehlsdorff, Sven, 30853, Langenhagen (DE)

(57) **Zusammenfassung**

Die Erfindung betrifft eine tragbare elektronische Vorrichtung mit einer Anzeigeeinheit und mit einer mit der Anzeigeeinheit verbundenen Bedieneinheit, die gegenüber der Anzeigeeinheit drehbar gelagert ist, wobei die Bedieneinheit wenigstens eine Drucktaste und eine Kamera aufweist, dadurch gekennzeichnet, dass die Kamera auf einer der wenigstens einen Drucktaste gegenüberliegenden Seite der Bedieneinheit angeordnet ist.

## Beschreibung

### Stand der Technik

Die Erfindung geht aus von einem tragbaren elektronischen Gerät nach der Gattung des unabhängigen Anspruchs. Aus der US 2006/0105806 A1 ist bereits ein Mobiltelefon bekannt, in das eine Kamera integriert ist. Hierzu ist ein kleiner Teil des Mobiltelefons derart drehbar ausgeführt, dass nach einem Bewegen eines Riegels ein an der Schmalseite des Mobiltelefons angeordnetes Kameraobjektiv freigegeben wird. Der drehbare Teil des Mobiltelefon-Gehäuses mit dem seitlich angeordneten Kameraobjektiv und drei an der Breitseite des Telefons angeordneten Tasten des Telefon-Tastenfeldes kann nun gedreht werden.

### Offenbarung der Erfindung

Das erfindungsgemäße tragbare elektronische Gerät mit den Merkmalen des unabhängigen Anspruchs hat demgegenüber den Vorteil, dass benachbart zu einer Anzeigeeinheit eine drehbare Bedieneinheit vorgesehen ist, bei der wenigstens eine Drucktaste und die Kamera auf jeweils gegenüberliegenden Seiten der drehbar angeordneten Bedieneinheit angeordnet sind. Indem sich eine Ausrichtung des Kameraobjektivs und eine Bedienungsoberfläche gegenüber liegen, wird die Bedienung für einen Benutzer erleichtert. Insbesondere wird es möglich, die an der Bedieneinheit angeordnete Drucktaste zu betrachten, während die auf der gegenüberliegenden Seite angeordnete Kamera auf ein Zielobjekt gerichtet ist.

Durch die in den Unteransprüchen aufgeführten Maßnahmen sind vorteilhafte Weiterbildungen und Verbesserungen des in dem Hauptanspruch angegebenen tragbaren elektronischen Geräts möglich. Es ist insbesondere vorteilhaft, alle Drucktasten des tragbaren elektronischen Geräts an der Bedieneinheit auf der der Kamera gegenüberliegenden Seite anzuordnen, da hierdurch die gesamte Fläche der Anzeigeeinheit für eine Darstellung genutzt werden kann. Zudem ist eine übersichtliche Trennung zwischen Anzeige- und Bedienfunktionalitäten möglich. Durch die drehbare Anordnung kann zudem ein Benutzer die Drucktasten so drehen, dass eine bequeme Bedienung der Drucktasten für ihn möglich ist.

Es ist ferner vorteilhaft, die wenigstens eine Drucktaste derart an der Bedieneinheit anzuordnen, dass eine Drehposition der Bedieneinheit gegenüber der Anzeigeeinheit besteht, an der eine Oberfläche, an der die Drucktaste angeordnet ist, bündig, d. h. ohne eine Stufe, in eine Oberfläche übergeht, an der eine Anzeigefläche der Anzeigeeinheit angeordnet ist. Hierbei sind in einer vorteilhaften Ausführung sowohl die wenigstens eine Drucktaste, bzw. in einer weiteren Ausführungsform alle Drucktasten, sowie die Anzeigeeinheit an einer Breitseite des tragbaren elektronischen Geräts angeordnet, wenn eine solche Drehstellung der Bedieneinheit gegenüber der Anzeigeeinheit eingestellt ist. In diesem Zustand kann sowohl vorteilhaft die Anzeige betrachtet, das Gerät auf eine ebene Fläche gelegt und die Bedieneinheit betätigt werden.

Es ist ferner vorteilhaft, die Bedieneinheit von der Anzeigeeinheit abnehmbar anzuordnen. Hierdurch kann einerseits die Anzeigeeinheit ohne die Bedieneinheit verwendet werden, beispielsweise zur Bilddarstellung. Ferner kann auch die Bedieneinheit mit der Kamera abgenommen werden, falls beispielsweise Bildaufnahmen gemacht werden sollen, die Anzeigeeinheit aber nicht benötigt wird. Die Bedieneinheit mit der Kamera kann dann ohne Gefährdung der Anzeigeeinheit getrennt von dieser mitgeführt werden.

Ferner ist es vorteilhaft, eine Schalteinheit vorzusehen, die automatisch die Kamera bei einem Verdrehen der Bedieneinheit aus einer vorgegebenen Ruhelage gegenüber der Anzeigeeinheit aktiviert. Hierdurch kann auf eine gesonderte Aktivierung der Kamera verzichtet werden. Nach einer vorgegebenen Zeit kann für den Fall, dass keine Bildauslösung erfolgt, die Kamera auch wieder automatisch abgeschaltet werden.

Um Aufnahmen bei Dunkelheit zu erleichtern bzw. um insbesondere eine Belichtungsmessung durchzuführen, sind vorteilhaft neben der Kamera eine Blitzlichteinrichtung und/oder Sensoren insbesondere zur Helligkeitsmessung angeordnet.

In einer vorteilhaften Ausgestaltung ist das tragbare Gerät insbesondere zu einer Fahrtroutenberechnung zu einem Fahrziel oder auch zu einer Fahrerüberwachung in einem Fahrzeug ausgelegt. Die Fahrerüberwachung ist dabei vorteilhaft durch die integrierte Kamera möglich, ohne dass eine Verbindung zu weiteren Messelementen zur Fahrerüberwachung erforderlich ist.

Vorteilhaft ist das tragbare elektronische Gerät mit einer Halterung derart versehen, dass das elektronische Gerät lösbar in einem Fahrzeug befestigt werden kann, so dass die Funktionalitäten des tragbaren elektronischen Geräts auch während einer Fahrt zur Verfügung stehen. Dabei ist das tragbare elektronische Gerät auch während der Fahrt so angeordnet, dass es bei einer plötzlichen Beschleunigungseinwirkung gesichert ist.

In einer vorteilhaften Ausführungsform ist zudem die Anzeigeeinheit als ein Touch-Screen-Bildschirm ausgeführt, so dass neben einer Steuerung über die Drucktasten der Bedieneinheit auch eine Steuerung des tragbaren elektronischen Geräts über die Anzeigefläche der Anzeigeeinheit möglich ist.

In einer weiteren vorteilhaften Ausgestaltung weist das tragbare elektronische Gerät eine Positionsbestimmungseinheit beispielsweise in Form einer GPS-Positionsbestimmungseinheit auf. Über eine solche insbesondere satellitengestützte Positionsbestimmung kann die aktuelle Position des tragbaren elektronischen Geräts ermittelt werden. Eine entsprechende Positionsbestimmung kann beispielsweise für eine Fahrtroutenbestimmung verwendet werden. Ferner ist es auch möglich, für den Fall, dass eine Bildaufnahme mit der Kamera durchgeführt wird, zusammen mit der Bildinformation eine Positions-Information zu speichern. Hierdurch ist es später nachvollziehbar, an welcher Stelle ein gespeichertes Bild mit dem tragbaren elektronischen Gerät aufgenommen wurde.

Kurze Beschreibung der Zeichnungen

Ausführungsbeispiele der Erfindung sind in den Zeichnungen dargestellt und in der nachfolgenden Beschreibung näher erläutert.

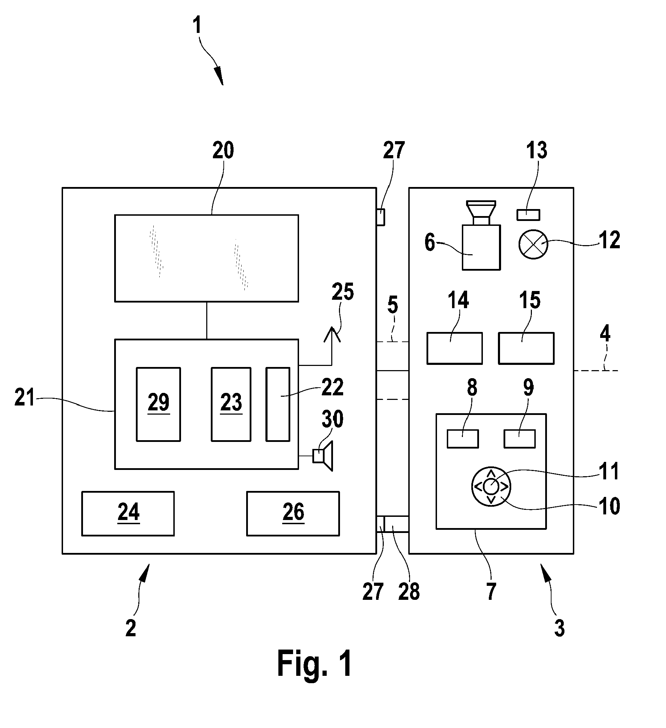

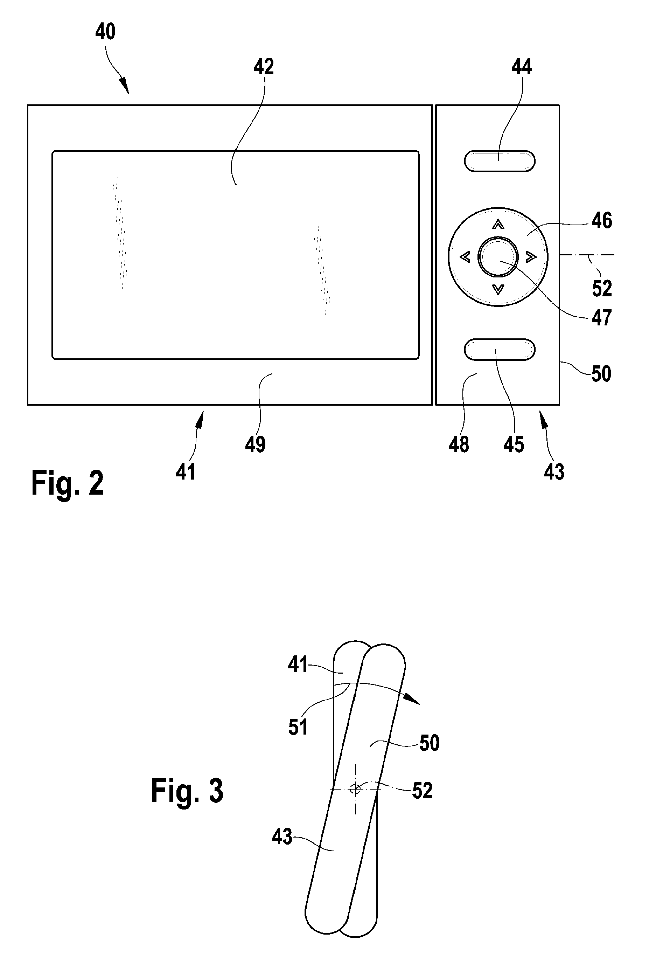

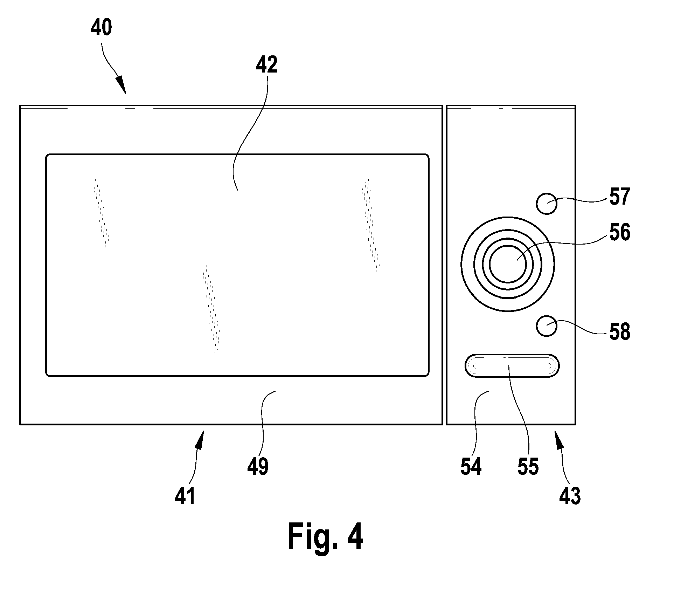

Es zeigen: Figur 1 eine schematische Darstellung eines erfindungsgemäßen tragbaren elektronischen Geräts, Figur 2 eine erste Frontansicht eines erfindungsgemäßen tragbaren elektronischen Geräts, Figur 3 eine Darstellung der Drehung der Bedieneinheit gegenüber der Anzeigeeinheit in einer seitlichen Ansicht des tragbaren elektronischen Geräts gemäß der Figuren 2 bzw. 4 und Figur 4
eine zweite Frontansicht eines erfindungsgemäßen tragbaren elektronischen Geräts mit einer im Vergleich zu der Figur 2 um 180 Grad gedrehten Bedieneinheit gegenüber der Anzeigeeinheit.

### Ausführungsformen der Erfindung

In der Figur 1 ist ein tragbares elektronisches Gerät 1 schematisch dargestellt. Das tragbare elektronische Gerät ist beispielsweise als ein tragbarer Kleincomputer ausgeführt, z.B. als ein sogenannter PDA (personal digital assistent). Das tragbare elektronische Gerät 1 weist eine Anzeigeeinheit 2 und eine Bedieneinheit 3 auf. Die Bedieneinheit 3 ist gegenüber der Anzeigeeinheit 2 um eine Drehachse 4 drehbar angeordnet. Hierzu ist zwischen der Anzeigeeinheit 2 und der Bedieneinheit 3 eine Lagerung 5 vorgesehen, die ebenfalls gestrichelt dargestellt ist. Die Lagerung 5 ist dabei bevorzugt derart ausgeführt, dass ein Einrasten der Bedieneinheit 3 gegenüber der Anzeigeeinheit 2 möglich ist, sodass für ein Lösen der Verrastung ein Drehmoment aufgewendet werden muss, das im Vergleich zu einer sonstigen Drehung der Anzeigeeinheit 2 gegenüber der Bedieneinheit 3 erhöht ist. Ein Einrasten ist insbesondere für eine Position vorgesehen, bei der die Seitenkanten und die Oberflächen jeweils der Bedieneinheit 3 und der Anzeigeeinheit 2 stufenlos ineinander übergehen. Damit sind zwei Stellungen der Bedieneinheit 3 gegenüber der Anzeigeeinheit 2 durch die Einrastfunktion hervorgehoben, wobei sich die beiden Positionen um einen Drehwinkel von 180 Grad unterscheiden.

An zwei gegenüberliegenden Seiten der Bedieneinheit 3 sind eine Kamera 6 und ein Tastenfeld 7 angeordnet. Insbesondere sind die Kamera 6 und das Tastenfeld 7 an einer Breitseite der Bedieneinheit 3 angeordnet. Das Tastenfeld 7 weist in einer ersten Ausführungsform lediglich eine Drucktaste auf. In der hier gezeigten Ausführungsform weist das Tastenfeld 7 eine erste Drucktaste 8, eine zweite Drucktaste 9 sowie eine Wipptaste 10 mit einem zentralen Drucktasten-Element 11 auf. Ferner kann die Bedieneinheit 3 in weiteren Ausführungsformen auf der Seite der Kamera 6 beispielsweise eine Blitzlampe 12 und/oder ein Sensorelement 13 aufweisen, beispielsweise einen Entfernungsmesser und/oder einen Belichtungsmesser. In der Bedieneinheit 3 selbst sind in einer Ausführungsform eine Speichereinheit 14 und/oder eine Spannungsquelle 15 vorgesehen. Die Speichereinheit 14 und die Spannungsquelle 15 sind bevorzugt bei einer solchen Ausführungsform in der Bedieneinheit 3 angeordnet, bei der die Bedieneinheit 3 von der Anzeigeeinheit 2 abnehmbar ausgeführt ist.

Die Anzeigeeinheit 2 weist eine Anzeigefläche 20 auf, die beispielsweise als eine Flüssigkristallanzeige ausführt ist. In einer Ausführungsform kann die Anzeigefläche 20 auch als eine berührungsempfindliche Touch-Screen-Oberfläche ausgeführt sein, über deren Berührung eine Steuerung der Anzeigeeinheit 2 möglich ist. Ferner weist die Anzeigeeinheit 2 eine Recheneinheit 21 auf, die insbesondere der Steuerung der Anzeigefläche 20 dient. In der Recheneinheit 21 können ein oder mehrere Programmblöcke abgelegt sein, die entsprechend den Funktionalitäten der Programmblöcke einer Funktion des tragbaren elektronischen Geräts dienen. So ist beispielsweise ein erster Programmblock 22 vorgesehen, der einer Speicherung der von der Kamera 6 aufgenommenen Bilder in der Speichereinheit 14 bzw. in einer Speichereinheit 24 in der Anzeigeeinheit dient. Entsprechend dem Programmblock 22 können die aufgenommenen Bilder auch in der Anzeigefläche 20 dargestellt werden. Vorteilhaft wird zusammen mit den Bilddaten bevorzugt auch eine Uhrzeit mit abgespeichert. Eine Zeitermittlung kann beispielsweise durch die Recheneinheit 21 erfolgen.

In einer weiteren Ausführungsform ist ein Programmblock 23 vorgesehen, in den eine Navigationsfunktion integriert ist. Durch eine entsprechende Eingabe eines Benutzers kann ein Fahrziel vorgegeben werden. Die Recheneinheit 21 kann eine Fahrroute von einem vorgegebenen Startpunkt zu einem Fahrziel bestimmen und die Fahrtroute in der Anzeigefläche 20 darstellen.

In einer weiteren Ausführungsform weist die Anzeigeeinheit eine Positionsbestimmungseinrichtung 25 auf, die beispielsweise als eine GPS-Positionsbestimmungseinheit ausgeführt ist. Über einen Funkempfang von mehreren Satelliten ist es über eine derartige Satelliten-Positionsbestimmungseinheit möglich, eine Position des tragbaren elektronischen Geräts 1 auf der Erde zu bestimmen. Somit kann ausgehend von der bestimmten Position beispielsweise auch eine Fahrroute zu einem eingegebenen Fahrziel bestimmt werden. In einer alternativen Ausführungsform kann die Positionsbestimmungseinrichtung 25 auch in der Bedieneinheit 3 angeordnet sein.

In einer weiteren Ausführungsform ist es möglich, bei einer beispielsweise über das zentrale Druckelement 11 ausgelösten Bildaufnahme durch die Kamera 6, beispielsweise eine Aufnahme eines Standbildes, auch eine Positionsbestimmung über die Ortungseinheit 25 durchzuführen. Die auf diese Weise ermittelte Position wird zusammen mit den aufgenommenen Bilddaten in der Speichereinheit 14 und/oder in der Speichereinheit 24 abgelegt. Ist zu dem jeweiligen Zeitpunkt der Aufnahme keine Ortung möglich, kann auch eine zuletzt ermittelte Position zusammen mit der Uhrzeit der letzten Positionsbestimmung abgespeichert werden. Eine Zeitinformation kann beispielsweise auch aus dem Satellitensignal des Satellitenortungssystems gewonnen werden. Zur Spannungsversorgung weist die Anzeigeeinheit 2 eine Spannungsversorgungseinheit 26 auf, beispielsweise einen Akkumulator.

In einer Ausführungsform kann an der Anzeigeeinheit 2 und/oder an der Bedieneinheit 3 ein Schaltelement 27, 28 angeordnet sein, das bei einem Drehen der Bedieneinheit 3 gegenüber der Anzeigeeinheit 2 aus einer Ruhelage auslöst. In einer ersten Ausführungsform kann hierdurch eine Kamerafunktionalität gestartet werden. Hierbei nimmt die Kamera 6 ein Bild auf, dass in der Anzeigefläche 20 automatisch dargestellt wird. Bei einer Betätigung einer entsprechenden Drucktaste in dem Tastenfeld 7 kann dann ein aufgenommenes Bild in einem Speicher 24, 14 abgelegt werden. Das Schaltelement 27, 28 kann zudem zur Realisierung einer Einrastfunktion der Anzeigeeinheit 2 gegenüber der Bedieneinheit 3 verwendet werden.

In einer weiteren Ausführungsform weist die Recheneinheit 21 einen Programmblock 29 auf, gemäß dem eine Fahrerüberwachung durchgeführt wird. Hierzu wird das tragbare elektronische Gerät 1 beispielsweise in einer Halterung in einem Fahrzeug so eingesetzt und die Bedieneinheit 3 gegenüber der Anzeigeeinheit 2 so gedreht, dass die Kamera 6 einen Fahrer des Fahrzeugs beobachten kann. Das aufgenommene Bild des Fahrers wird von der Recheneinheit 21 verarbeitet. Hierzu kann beispielsweise die Kopfposition oder ein Öffnen der Augen des Fahrers überwacht werden. Die aufgenommenen Bilder werden hierzu mit vorgegebenen Bildinformationen bezüglich der Fahrer-Kopfpositionen oder der Augen verglichen. Wird ermittelt, dass der Kopf des Fahrers nach vorne fällt oder die Augen mehr als gewöhnlich schließen, kann über einen Lautsprecher 30 ein Warnton an den Fahrer ausgegeben werden.

In der Figur 2 ist ein Ausführungsbeispiel für ein tragbares elektronisches Gerät 40 in einer Frontansicht gezeigt. An einer Anzeigeeinheit 41 mit einer Anzeigefläche 42 ist eine Bedieneinheit 43 angeordnet, die eine erste Taste 44, eine zweite Taste 45, eine Kreuzwippe 46 und eine in der Kreuzwippe 46 angeordnete zentrale Drucktaste 47 aufweist. In der Figur 2 ist die Bedieneinheit 43 gegenüber der Anzeigeeinheit 41 so eingestellt, dass eine Oberfläche 48 der Bedieneinheit 43 mit den Tasten 44, 45, 46, 47 an eine Oberfläche 49 der Anzeigeeinheit 41 mit der Anzeigefläche 42 anschließt.

In der Figur 3 ist in einer Ansicht auf eine Schmalseite 50 des elektronischen Geräts eine Bewegung der Bedieneinheit 43 gegenüber der Anzeigeeinheit 41 in einer Pfeilrichtung 51 dargestellt. Bei einer Drehung in die Pfeilrichtung 51 um 180 Grad um eine Drehachse 52, die in der Figur 2 strichpunktiert gezeigt ist, ergibt sich eine Darstellung des tragbaren elektronischen Geräts 40 gemäß der Figur 4. Die Bedieneinheit 43 ist nunmehr im Vergleich zu Anordnung gemäß der Figur 2 gegenüber der Anzeigeeinheit 41 um 180 Grad gedreht. Eine Oberfläche 54 der Bedieneinheit 43, die der Oberfläche 48 gegenüberliegt, schließt nunmehr an die Oberfläche 49 der Anzeigeeinheit 41 an. An dieser Oberfläche sind eine Blitzlichteinrichtung 55, ein Kameraobjektiv 56 und Sensoren 57, 58 angeordnet. Mit dem Objektiv 56 können entsprechend nun Bildaufnahmen beispielsweise eines Betrachters der Anzeigefläche 42 vorgenommen werden.

Die Bedieneinheit 43 kann in einer Ausführungsform um die Drehachse 52 in beliebige Richtung endlos gedreht werden. In einer weiteren Ausführungsform kann sie auch von der Anzeigeeinheit 41 abgenommen werden.

In der Anzeigefläche 42 sind insbesondere die Ausgaben einer Navigationsvorrichtung darstellbar, beispielsweise ein Richtungspfeil oder eine Kartendarstellung. Ferner können auch von der Kamera aufgenommene Bilddaten in der Anzeigefläche 42 dargestellt werden. Außerdem können auch weitere Funktionen eines sogenannten PDA (Personal Digital Assistant), wie beispielsweise eine Textverarbeitung oder eine Terminplanung, in der Anzeigefläche 42 dargestellt werden.

## Patentansprüche

1. Tragbares elektronisches Gerät (1, 40) mit einer Anzeigeeinheit (2, 41) und mit einer mit der Anzeigeeinheit (2, 41) verbundenen Bedieneinheit (3, 43), die gegenüber der Anzeigeeinheit (2, 41) drehbar gelagert ist, wobei die Bedieneinheit (3, 43) wenigstens eine Drucktaste (8, 9, 10, 11, 44, 45, 56, 47) und eine Kamera (6, 56) aufweist, **dadurch gekennzeichnet, dass** die Kamera (6, 56) auf einer der wenigstens einen Drucktaste (8, 9, 10, 11, 44, 45, 56, 47) gegenüberliegenden Seite (54) der Bedieneinheit (3, 43) angeordnet ist.

2. Tragbares elektronisches Gerät nach Anspruch 1, **dadurch gekennzeichnet, dass** die wenigstens eine Drucktaste (8, 9, 10, 11, 44, 45, 56, 47) so an der Bedieneinheit (3, 43) angeordnet ist, dass die Bedieneinheit (3, 43) derart gedreht werden kann, dass eine Oberfläche (48), an der die wenigstens eine Drucktaste (8, 9, 10, 11, 44, 45, 56, 47) der Bedieneinheit (3, 43) angeordnet ist, stufenlos in eine Oberfläche (49) übergeht, an der eine Anzeigefläche (20, 42) der Anzeigeeinheit (2, 41) angeordnet ist.

3. Tragbares elektronisches Gerät nach einem der vorhergehenden Ansprüche, **dadurch gekennzeichnet, dass** alle Drucktasten (8, 9, 10, 11, 44, 45, 56, 47) des tragbaren elektronischen Geräts (1, 40) an der Bedieneinheit (3, 43) auf der der Kamera (6, 56) gegenüberliegenden Seite (48) angeordnet sind.

4. Tragbares elektronisches Gerät nach einem der vorhergehenden Ansprüche, **dadurch gekennzeichnet, dass** die Bedieneinheit (3, 43) von der Anzeigeeinheit (2, 41) abnehmbar an der Anzeigeeinheit (2, 41) angeordnet ist.

5. Tragbares elektronisches Gerät nach einem der vorhergehenden Ansprüche, **gekennzeichnet durch** eine Schalteinheit (27, 28, 29) zur automatischen Aktivierung der Kamera (6, 56) bei einem Verdrehen der Bedieneinheit (3, 43) gegenüber der Anzeigeeinheit (2, 41).

6. Tragbares elektronisches Gerät nach einem der vorhergehenden Ansprüche, **gekennzeichnet durch** eine Blitzlichteinrichtung (12, 55) und/oder eine Sensoreinrichtung (13, 57, 58), die neben der Kamera (6, 56) an der Bedieneinheit (3, 43) angeordnet sind.

7. Tragbares elektronisches Gerät nach einem der vorhergehenden Ansprüche, **gekennzeichnet durch** eine Positionsbestimmungseinrichtung (25).

8. Tragbares elektronisches Gerät nach einem der vorhergehenden Ansprüche, **gekennzeichnet durch** eine Recheneinheit (21) zur Fahrtroutenberechnung und/oder zur Fahrerüberwachung.

9. Tragbares elektronisches Gerät nach einem der vorhergehenden Ansprüche, **gekennzeichnet durch** eine Halterung zur lösbaren Befestigung des tragbaren elektronischen Geräts (1, 40) in einem Fahrzeug.

10. Tragbares elektronisches Gerät nach einem der vorhergehenden Ansprüche, **dadurch gekennzeichnet, dass** die Anzeigenoberfläche (20, 42) der Anzeigeeinheit (2, 41) als ein Touch-Screen-Bildschirm ausgeführt ist.
